# EUROPEAN PATENT SPECIFICATION

(11) **EP 1 867 058 B1**
(45) Date of publication and mention of the grant of the patent: **17.08.2011**
(21) Application number: 05808605.9
(22) Date of filing: 24.10.2005
(51) Int. Cl.: H04B 1/38

(54) **SLIDING HINGE DEVICE AND METHOD OF MANUFACTURING THE SLIDING HINGE DEVICE**
SCHIEBESCHWENKEINRICHTUNG UND VERFAHREN ZUR HERSTELLUNG DER SCHIEBESCHWENKEINRICHTUNG
DISPOSITIF ARTICULE COULISSANT ET PROCEDE DE FABRICATION DU DISPOSITIF ARTICULE COULISSANT

(30) Priority: 08.04.2005 KR 20050029256
(43) Date of publication of application: 19.12.2007
(73) Proprietor: Shell-Line Co., Ltd., Gumi-si, Gyeongsangbuk-do 730-320 (KR)
(72) Inventor: LEE, Sang Ho, 230-1, Yongsan-dong, Daegu 704-130 (KR)
(74) Representative: Rupprecht, Kay
(86) International application number: PCT/KR2005/003532
(87) International publication number: WO 2006/107129

(56) References cited:
- EP-A2- 1 150 476
- WO-A-2005/076487
- KR-A- 20060 019 967
- KR-B1- 100 453 644
- KR-Y1- 200 345 693
- KR-Y1- 200 350 313

## Description

### Technical Field

The present invention relates to a slide type personal portable device, and more particularly, to a slide type personal portable device, a slide hinge device mounted on the terminal, and a method of manufacturing the slide hinge device.

### Background Art

Mobile phones may be generally divided into a flip type, a folder type, and a slide type, according to an external shape or operation method.

In a slide type phone, two sliding bodies are disposed while overlapped with each other and a display unit and key input unit are disposed in the same direction on the bodies, respectively. Generally, the slide type phone may exposure a display unit or key input unit on the rear by moving a front sliding body. For example, there is a slide type phone whose key input unit formed on a rear sliding body is exposed by pushing up a front sliding body. Also, there is a slide type phone whose display unit formed on a rear sliding body is exposed by downwardly moving a front sliding body on which a key input unit is formed.

A slide type mobile phone includes sliding bodies overlapped above and below. A slide hinge device connecting both bodies is interposed between the sliding bodies to mutually connect the sliding bodies and enable the sliding bodies to slide. In association with a slide hinge device, hinge devices of various structures are disclosed. Among the disclosed hinge devices, there is a hinge device using a guide bar or shaft, whose bodies may precisely slide by using the guide bar.

KR-A-100453644 discloses a sliding open/close device, especially related to preventing separation during a sliding by adding a reinforcing guide structure of a rail engaged with a guide end. This sliding open/close device is provided to continuously move up to a target position and to add a rail structure engaged with a guide end. This movement up can be achieved by an elastic force of a torsion spring when a slide member moves along a guide rail member. Separation and transformation during a sliding should be prevented.

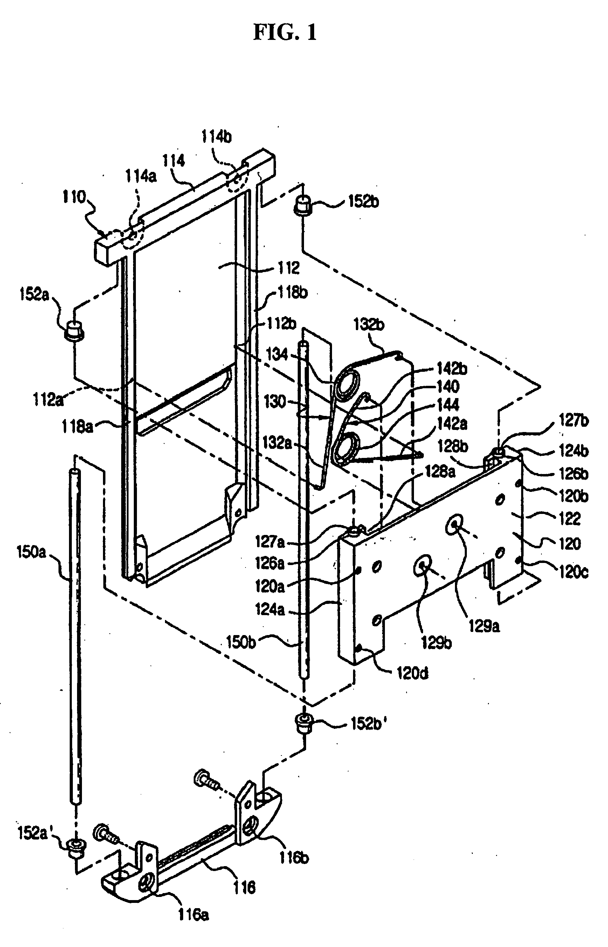

FIG. 1 is a perspective view illustrating a conventional slide hinge device. Referring to FIG. 1, the conventional slide hinge device includes a guide rail element 110, a slide element 120 sliding on the guide rail element 110, and first and second torsion springs 130 and 140 promoting the sliding of the slide element 120.

The guide rail element 110 is formed of a rectangular board 112. First and second guide bars 150a and 150b are installed along both sides of the rectangular board 112 parallel to each other. The first and second guide bars 150a and 150b are separated from the both sides of the rectangular board 112 at a certain distance. Both ends of the first and second guide bars 150a and 150b are fastened to top and bottom supporters 114 and 116 of the rectangular board 112.

Also, top and bottom shock absorbing rubbers 152a to 152b' are slipped on both top and bottom ends of the first and second guide bars 150a and 150b and both the top and bottom ends enter into the top and bottom supporters 114 and 116 and are fastened thereto. The top and bottom shock absorbing rubbers 152a to 152b' are in the shape of a hat in order to cover the ends of the first and second guide bars 150a and 150b, prevent a direct collision between the guide rail element 110 and the slide element 120, and enable the first and second guide bars 150a and 150b installed along the guide rail element 110 in sliding of the slide element 120.

Two holes are formed adjacent to both outer edges of the rectangular board 112. An arm 132a of the first torsion spring 130 and an arm 142a of the second torsion spring 140 are inserted into the holes to rotate.

First and second guide sills 118a and 118b are formed on both sides of the rectangular board 112, opposite to the first and second guide bars 150a and 150b. In detail, the first guide sill 118a opposite to the first guide bar 150a and the second guide sill 118b opposite to the second guide bar 150b are formed as straight protrusions extended and protruded from the both sides of the rectangular board 112.

The slide element 120 may straightly slide on the guide rail element 110. For this, the slide element 120 includes first and second slide engagement portions 124a and 124b formed on both edges of a substrate 122. First and second guide holes 126a and 126b which the first and second guide bars 150a and 150b penetrate, respectively, are formed on the first and second slide engagement portions 124a and 124b. Two pairs of bearings are inserted into the first and second guide holes 126a and 126b to mitigate contact friction in sliding of the first and second guide bars 150a and 150b. The bearings are generally formed of polyoxymethylene (POM). The guide rail elements 110 do not directly make contact with the slide elements 120, an impact may be reduced, and noise may be reduced by using the bearings 127a to 127b' and the shock absorbing rubbers 152a to 152b'.

First and second rails 128a and 128b protruded toward each other are formed inside the first and second slide engagement portions 124a and 124b. The first and second rails 128a and 128b are engaged with the first and second guide sills 118a and 118b to slide, respectively. In this case, since there is a gap between the first and second rails 128a and 128b and the first and second guide sills 118a and 118b, the rails 128a and 128b do not directly make contact with the guide sills 118a and 118b when sliding. When sliding, the first and second guide bars 150a and 150b and the first and second guide holes 126a and 126b mainly lead the sliding movement of the sliding bodies, and the first and second guide sills 118a and 118b and the first and second rails 128a and 128b assist to suppress a deviation or diversion of the slide element 120 so that the slide element 120 stably slides on the guide rail element 110.

After assembling the slide hinge device 100, an upper body and lower body of a mobile phone are screwed to the guide rail element 110 and the slide element 120, respectively, thereby completing a slide type mobile phone (not shown). Since a slide type mobile phone is generally used by holding a lower body with a hand and pushing up an upper body corresponding to a cover, a guide rail element fastened to the upper body may move on a slide element fastened to the lower body.

Generally, the guide rail element 110 and the slide element 120 are formed of aluminum and manufactured by die casting. Generally, the first and second guide bars 150a and 150b are formed separately from the guide rail element 110. Accordingly, the lower supporter 116 has a structure separated from the rectangular board 112 and is engaged with the rectangular board 112 by inserting the first and second guide bars 150a and 150b. Since the first and second guide holes 126a and 126b for containing the first and second guide bars 150a and 150b can not be formed by die casting, the first and second guide holes 126a and 126b have to be formed by an additional process of making a hole after manufacturing the slide element 120. Next, the bearings 127a to 127b' formed of POM are additionally inserted.

A slide hinge device using a guide bar or shaft may enable a slide body to stably slide. However, to manufacture the conventional slide hinge device, aluminum (AL) casting, aluminum extrusion molding, hole-processing, tap processing, side-T cutting, and fluoride resin coating are required. Namely, by adding the guide bar structure, manufacturing of the hinge device becomes complicated, and by adding the hole-processing for the guide holes 126a and 126b, manufacturing cost or defect rate of a product may be increased.

### Disclosure of Invention

### Technical Goals

An aspect of the present invention provides a slide hinge device capable of being simply manufactured and a method of manufacturing the slide hinge device.

An aspect of the present invention provides a slide hinge device whose number of processes for manufacturing may be reduced and whose defect rate may be reduced, and a method of manufacturing the slide hinge device.

### Technical Solutions

According to an aspect of the present invention, there is provided a slide hinge device that includes a rail hinge unit and a guide frame.

The rail hinge unit includes guide bars disposed parallel to each other. The slide hinge unit includes a guide frame having a fixing portion and slide guides having a penetration hole formed in a center, corresponding to each of the guide bars. The slide guides may be injection molded to the guide frame to be fixed to the guide frame by means of the fixing portion. Accordingly, the rail hinge unit and the slide hinge unit may be stably assembled with each other and the slide hinge unit may slide on the rail hinge unit along the guide bar.

In conventional techniques, to manufacture a slide hinge device, AL casting, aluminum extrusion molding, hole-processing, tap processing, side-T cutting, and fluoride resin coating are required. Accordingly, a process of assembling a rail hinge unit with a slide hinge unit may be difficult and a manufacturing cost may be increased.

However, in the slide hinge device according to an embodiment of the present invention, the fixing unit protruded toward the slide guide is integrated to the guide frame together with the slide guide, thereby omitting processes such as hole-processing and screw connecting. Accordingly, a process of assembling the slide hinge device may be easy and a manufacturing cost may be reduced.

Structural advantages and economic profits of the slide hinge device may be applied to a personal portable device. The personal portable device further includes a first terminal body and a second terminal body, in addition to the slide hinge device. The rail plate of the slide hinge device may be installed to the first terminal body, and the guide frame may be installed to the second terminal body.

In the present specification, a personal portable device indicates a portable electric/electronic device such as a Personal Digital Assistant (PDA), a smart phone, a handheld PC, a mobile phone, and an MP3 player, which may include a predetermined communication module such as a Code Division Multiple Access (CDMA) module, a Bluetooth module, an Infrared Data Association (IrDA) module, and a wired/wireless LAN card and may be used as a concept designating a terminal having a predetermined operation ability by including a predetermined microprocessor executing a function of replaying multimedia.

According to an aspect of the present invention, there is provided a method of manufacturing a slide hinge device, the method including: providing a rail hinge unit including at least one guide bar parallel with a side thereof and a guide frame disposed adjacent to the guide bar; bending a part of the guide frame internally, which is formed by cutting in the guide frame; disposing the bent part of the guide frame in a first mold to be adjacent to a core of a first mold space; molding a slide guide integrated with the guide frame by using the first mold; and connecting the guide frame and the slide guide to the rail hinge unit. Accordingly, the slide guide and the guide frame may be stably maintained with each other and manufacturing processes may be reduced.

### Brief Description of Drawings

FIG. 1 is a perspective view illustrating a conventional slide device;
FIG. 2 is a perspective view illustrating a slide hinge device according to a first embodiment of the present invention;
FIG. 3 is an exploded perspective view illustrating the slide hinge device of FIG. 2;
FIG. 4 is a diagram illustrating a top view and a front view of a guide frame of the slide hinge device according to the first embodiment of the present invention;
FIGS. 5 and 6 are cross-sectional views illustrating a method of manufacturing the slide guide of FIG. 4;
FIG. 7 is a cross-sectional view illustrating a changed example of the slide hinge device according to the first embodiment of the present invention;
FIG. 8 is a cross-sectional view illustrating the method of manufacturing the slide hinge device according to the first embodiment of the present invention;
FIG. 9 is a diagram illustrating a top view and a front view of a slide hinge device according to a second embodiment of the present invention;
FIG. 10 is a cross-sectional view illustrating the slide hinge device of FIG. 9;
FIG. 11 is a cross-sectional view illustrating a changed example of the slide hinge device according to the second embodiment of the present invention;
FIG. 12 is a diagram illustrating a top view and a front view of a slide hinge device according to a third embodiment of the present invention;
FIG. 13 is a cross-sectional view illustrating the slide hinge device of FIG. 12;
FIG. 14 is a cross-sectional view illustrating a changed example of the slide hinge device according to the third embodiment of the present invention;
FIGS. 15 through 17 are partial enlarged views illustrating fixing portions of slide hinge devices according to other embodiments of the present invention, similar to the third embodiment;
FIG. 18 is a front view illustrating a slide hinge device according to a fourth embodiment of the present invention;
FIG. 19 is a side view of the slide hinge device of FIG. 18;
FIG. 20 is a cross-sectional view illustrating the slide hinge device of FIG. 18;
FIG. 21 is a cross-sectional view illustrating a changed example of the slide hinge device according to the fourth embodiment of the present invention;
FIG. 22 is a partial exploded perspective view illustrating a slide hinge device according to a fifth embodiment of the present invention; and
FIG. 23 is a partial cross-sectional view illustrating the slide hinge device of FIG. 22.

### Best Mode for Carrying Out the Invention

Hereinafter, though exemplary embodiments of the present invention will be described with reference to the attached drawings, however, the present invention is not limited to or defined by the embodiments.

### Embodiment 1

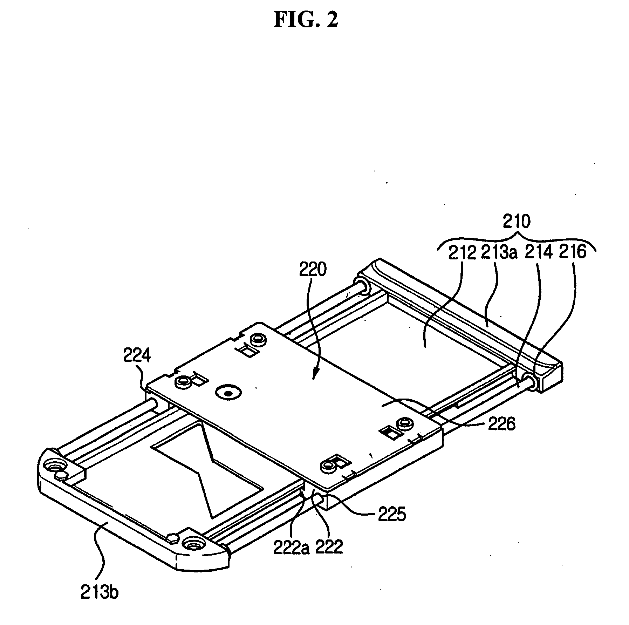

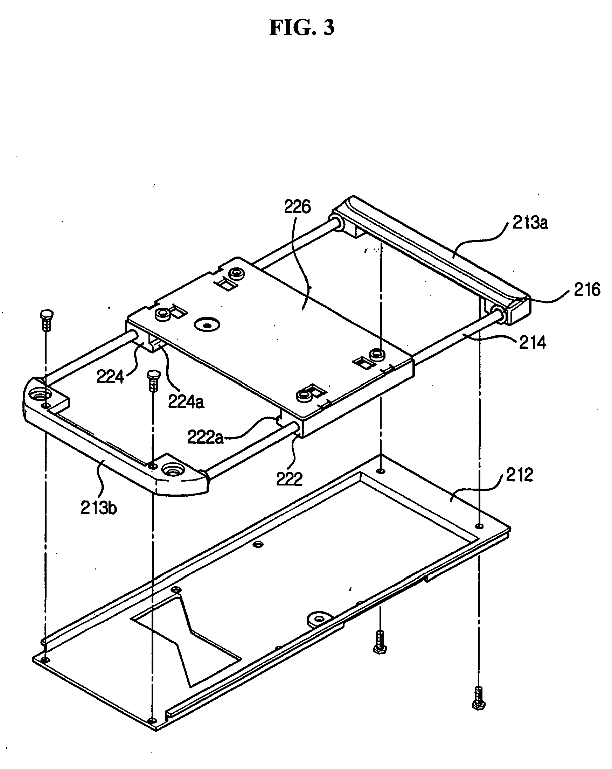

FIG. 2 is a perspective view illustrating a slide hinge device according to a first embodiment of the present invention, and FIG. 3 is an exploded perspective view illustrating the slide hinge device of FIG. 2.

Referring to FIGS. 2 and 3, the slide hinge device includes a rail hinge unit 210 and a slide hinge unit 220.

Generally, in a slide type personal portable device (not shown), the rail hinge unit 210 and the slide hinge unit 220 may be fastened to terminal bodies, respectively, and the terminal bodies may be opened and closed by movement between the rail hinge unit 210 and the slide hinge unit 220 interposed therebetween. Generally, the rail hinge unit 210 is installed to a front terminal body including a display unit, and the slide hinge unit 220 is installed to a rear terminal body including a keypad and a battery.

The terminal body includes internal and external components including a general terminal function and a circuit configuration. The terminal body may include a terminal case, a keypad, a display module, a wireless communication module, a battery, a microphone, and a receiver and may vary with manufacturing companies in an internal configuration.

The rail hinge unit 210 includes a rail plate 212 installed to the first terminal body of the personal portable device, an upper supporter 213a, a lower supporter 213b, and two guide bars 214 disposed parallel to a side of the rail plate 212. However, in other embodiments of the present invention, a plurality of guide bars may be formed according to an intention of a designer.

The rail plate 212 is connected to the upper supporter 213a and the lower supporter 213b to be integrated. An inner surface of the rail plate 212 may be attached to the personal portable device. The rail plate 212 may be manufactured to be thin by press processing. However, in other embodiments of the present invention, a rail plate may be composed of a metal and may be strengthened by die casting.

Also, a guide sill 212a is formed on a side of the rail plate 212 to prevent separation from the rail hinge unit 210. In this case, the guide sill 212a strengthens the rail plate 212. However, in other embodiments of the present invention, the guide sill 212a may be replaced by a groove protruded internally or externally to strengthen a rail plate.

The upper supporter 213a is connected to a top of the rail plate 212 by a screw. In this case, the screw is tightened from a bottom of the rail plate 212 to be connected to the upper supporter 213a. Accordingly, when sliding the terminal bodies, the tightened screw is not exposed to the outside of the personal portable device. The upper supporter 213a may be integrated with a top of the guide bar 214 by injection molding.

The lower supporter 213b may be connected to the bottom of the rail plate by a screw. The lower supporter 213b may be integrated with the bottom of the guide bar 214 by injection molding, similar to the upper supporter 213a.

The guide bar 214 is inserted into a penetration hole 225 of the slide hinge unit 220 and is coupled with the slide hinge unit 220. Accordingly, the slide hinge unit 220 may slide along the guide bar 214.

A damper 216 formed in a ring shape is provided adjacent to a connection portion of the guide bar 214 and the rail plate 212. The damper 216 is provided to reduce an impact and noise generated by direct contact between the slide hinge unit 220 and the rail hinge unit 210. The damper 216 may have various cross sections such as a circle and a square. The damper 216 may be composed of a crude rubber or a resin having a buffering function, similar to a conventional shock-absorbing rubber. However, the conventional shock-absorbing rubber is formed in a hat shape and covers an end portion of the guide bar 214. The damper 216 of FIGS. 2 and 3 is formed in a ring shape, and a position of the damper 216 on the guide bar may be controlled.

The slide hinge unit 220 includes slide guides 222 and 224 and a guide frame 226.

The penetration hole 225 formed in a center of the slide guides 222 and 224, respectively, enables the slide guides 222 and 224 to slide along the guide bars 214. Accordingly, the slide guides 222 and 224 directly rub with the guide bar 214 to slide, respectively.

In this case, when the guide bar 214 directly rubs with the slide guides 222 and 224 for a long time, a dust according to a property of a material may be generated, noise may be generated, and mutual abrasion may be generated. However, in the present invention, the slide guides 222 and 224 may be manufactured by using polyoxymethylene (POM). In this case, the POM has excellent mechanical, thermal, and chemical properties while in extended use over a wide temperature range. Also, since the POM has notably better clipping resistance and fatigue resistance than other resins and has a self-lubricating property, the POM is suitable for being used in forming the slide guides 222 and 224. However, in other embodiments, according to an intention of the designer, other self-lubricating materials such as polyamide and polyamide-imide may be substituted for the POM.

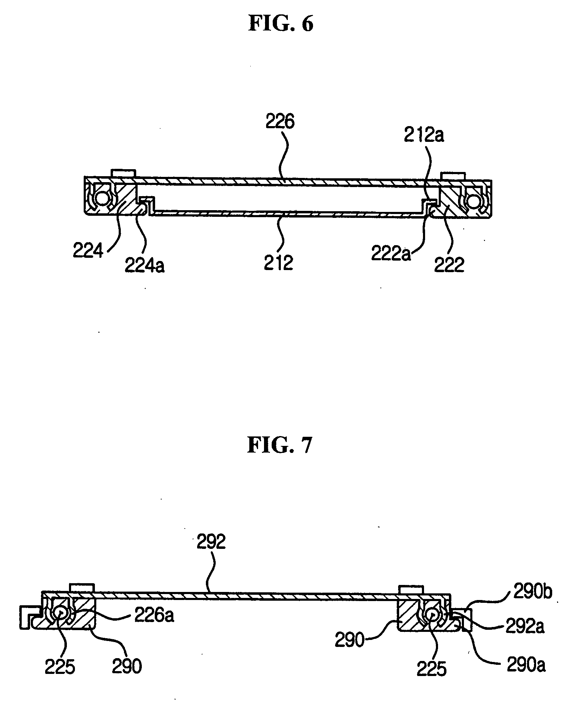

A guide sill 212a as shown in FIG 6, folded twice or more to be formed in the shape of a letter L, may be formed on both sides of the rail plate 212, a guide rail 222a corresponding to the guide sill 212a is formed on the slide guides 222 and 224. In this case, the guide sill 212a may be injection molded to be formed in the shape of L, thereby preventing the slide hinge device from being separated from the terminal body. However, in other embodiments of the present invention, according to an intention of the designer, a, guide sill may be formed on a side portion of a slide guide by not bending but protruding.

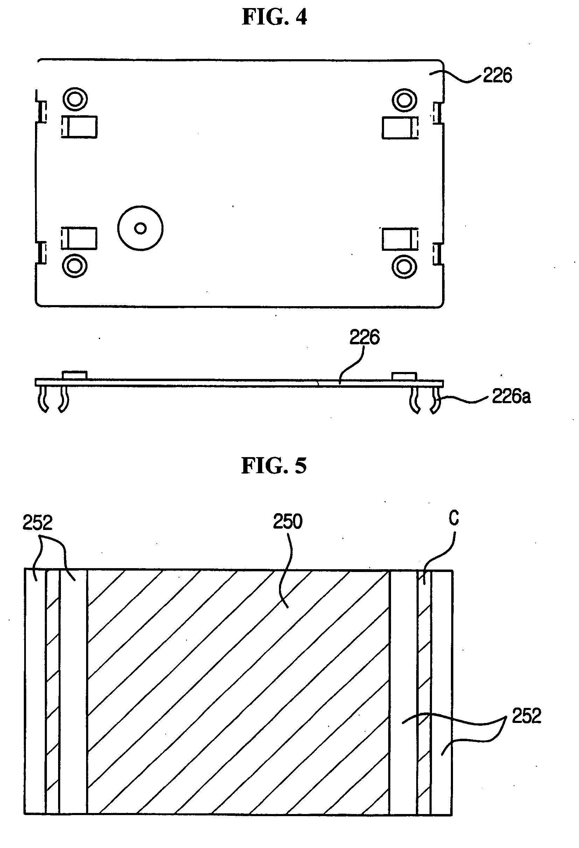

FIG. 4 is a diagram illustrating a top view and a front view of a guide frame of the slide hinge device according to the first embodiment of the present invention, and FIGS. 5 and 6 are cross-sectional views illustrating a method of manufacturing the slide guide of FIG. 4.

Referring to FIGS. 4 through 6, the guide frame 226 connects the slide guides 222 and 224 to be integrated with each other. An inner surface of the guide frame 226a is cut to be bent toward the slide guides 222 and 224 to form a fixing portion 226a therein. The fixing portion 226a is bent toward a bottom of the guide frame 226 and has a curved surface. In the present invention, a length of the fixing portion 226a may be determined such that the fixing portion 226a is protruded externally from an end of the guide frame 226. However, in other embodiments of the present invention, according to an intention of the designer, a length of a fixing portion may be established. The fixing portion may be formed separately from a guide frame and may be coupled with the guide frame while injection molding, thereby providing an effect identical with the present embodiment.

Also, the guide frame 226 may be composed of metal, and the cut portion of the guide frame 226 may be bent toward a desired direction. However, in other embodiments of the present invention, according to an intention of the designer, a guide frame may be manufactured by die casting.

In this case, when disposing the guide frame 226 on a first mold 250, the fixing portion 226a is disposed inside a first mold space 252. A core C for molding the penetration hole 225 is formed in a center of the first mold space 252. In this case, the core C is removed after injection molding to form the penetration hole 225. Accordingly, when injection molding using the first mold space 252, the guide frame 226 is connected to the slide guides 222 and 224 to be integrated, and the guide frame 226 and the slide guides 222 and 224 are coupled by the fixing portion 226a. However, in other embodiments of the present invention, according to an intention of the designer, a shape of a fixing portion may be variously formed.

As shown in FIG. 6, the guide sill 212a molded or bent in the shape of an L may be formed on both sides of the rail plate 212, and the guide rails 222a and 224a protruded inwardly and corresponding to the guide sill 212a are formed in the slide guides 222 an 224, thereby preventing mutual separation of the slide guide 222 and 224 and the rail plate 212.

FIG. 7 is a cross-sectional view illustrating a changed example of the slide hinge device according to the first embodiment of the present invention.

Referring to FIG. 7, the slide guide 290 is formed to be integrated with a fixing portion 292a protruded below the guide frame 292. In this case, a guide projection 290a is externally protruded from an outer side surface of the slide guide 290. The guide projection 290a may be closely attached to a guide rail 290b externally installed to prevent mutual separation of the slide guide 290 and the rail hinge unit 210.

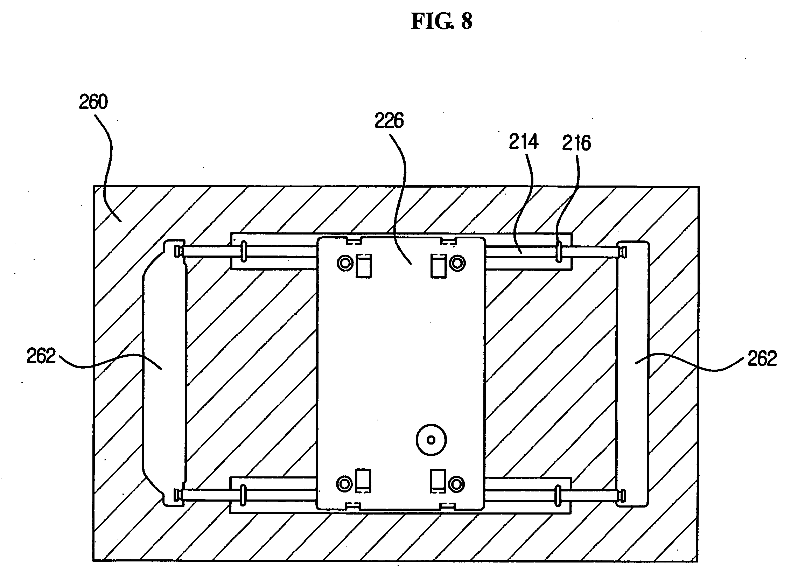

FIG. 8 is a cross-sectional view illustrating the method of manufacturing the slide hinge device according to the first embodiment of the present invention.

Referring to FIG. 8, after combining the slide hinge unit 220 with the guide bar 214, the slide hinge unit 220 and the guide bar 214 are disposed in a second mold 260 to locate both end portions of the guide bar 214 in a second mold space 262. The upper supporter 213a and the lower supporter 213a are formed to be integrated with the guide bar 214 by injection molding. After the described processes, the rail plate 212 is connected to the upper supporter 213a and the lower supporter 213b by a screw, thereby completing the slide hinge device.

In the slide hinge device and the personal portable device according to the present embodiment, the slide guides 222 and 224 are molded to be integrated with the guide frame, and the guide bar 214 and the upper and lower supporters 213a and 213b are formed to be integrated. Accordingly, there is no need to assemble the upper supporter 213a and the lower supporter 213b with the guide bar 214 and to assemble the guide frame 226 with the slide guides 222 and 224, thereby reducing manufacturing processes, manufacturing cost, and defect rate.

Also, the slide guides 222 and 224 may be stably connected to the guide frame 226, and the upper supporter 213a and the lower supporter 213b may be stably connected to the both end portions of the guide bar 214, respectively.

The slide hinge unit 220 may be manufactured by using a lubricant material. Therefore, when it being coupled with and sliding along the guide bar, there is no dust and slide functionality may be improved. Also, the slide hinge device has excellent mechanical, thermal, and chemical property due to property of manufacturing material, and has better fatigue resistant and antifriction properties than a conventional hinge device.

### Embodiment 2

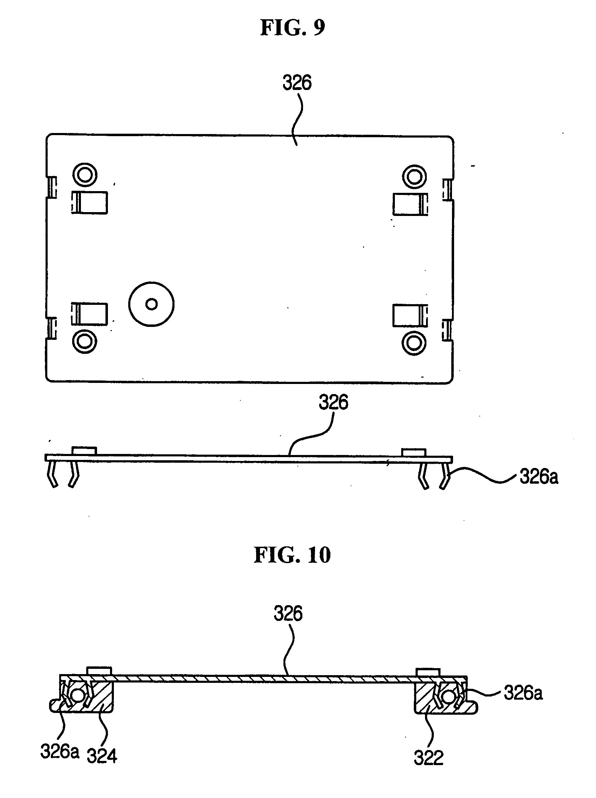

FIG. 9 is a diagram illustrating a top view and a front view of a slide hinge device according to a second embodiment of the present invention, and FIG. 10 is a cross-sectional view illustrating the slide hinge device of FIG. 9.

Referring to FIGS. 9 and 10, an inner surface of a guide frame 326 is cut to be molded or bent toward slide guides to form a fixing portion 326a. The fixing portion 326a is bent more than once toward a bottom of the guide frame 326 and is formed in the shape of L. In this case, the guide frame 326 may be injection molded to be formed in the shape of L. Accordingly, when injection molding the guide frame 326 to be integrated with the slide guides 322 and 324, the guide frame 326 and the slide guides 322 and 324 are not separated from each other and stably coupled with each other by the fixing portion 326a.

In addition, since a rail hinge unit and a slide hinge unit are substantially identical with the rail hinge unit 210 and the slide hinge unit 220 of the first embodiment, and function and effect of elements are formed substantially identical with the first embodiment, the description and the drawings of the previous embodiment may be referred to.

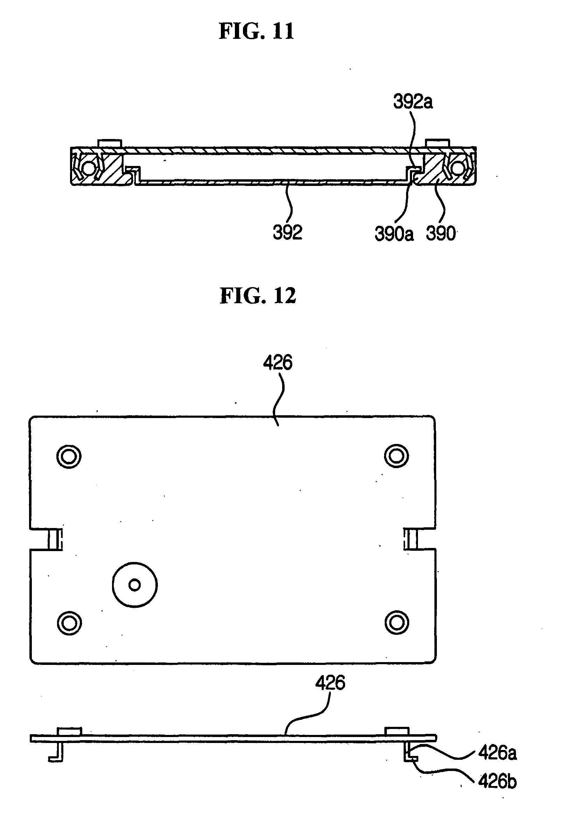

FIG. 11 is a cross-sectional view illustrating a changed example of the slide hinge device according to the second embodiment of the present invention.

Referring to FIG. 11, a guide rail 390a is formed inwardly on a slide guide 390. A guide sill 392a bent or molded in the shape of an L is formed on both sides of a rail plate 392 and is closely attached to the guide rail 390a. Therefore, mutual separation of the slide guide 390 and the rail plate 392 may be prevented.

### Embodiment 3

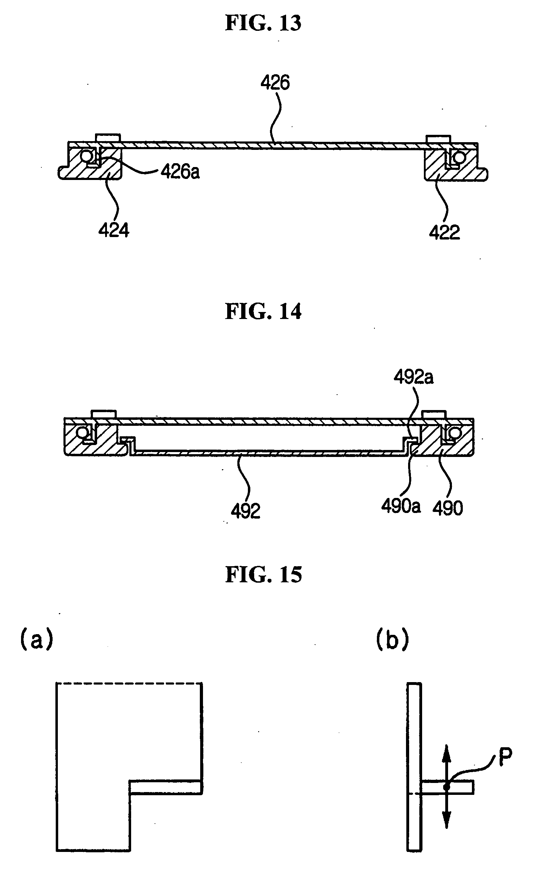

FIG. 12 is a diagram illustrating a top view and a front view of a slide hinge device according to a third embodiment of the present invention, and FIG. 13 is a cross-sectional view illustrating the slide hinge device of FIG. 12.

Referring to FIGS. 12 and 13, an inner surface of a guide frame 426 is cut to be bent or molded toward slide guides 422 and 424 to form a fixing portion 426a. The fixing portion 426a is bent below the guide frame 426. The fixing portion 426a is bent in an opposite of a direction of firstly bending the fixing portion 426a to be formed in the shape of L. In this case, the fixing portion 426a may be injection molded to be formed in the shape of L. Accordingly, when injection molding the guide frame to be integrated with the slide guides 422 and 424, the guide frame 426 and the slide guides 422 and 424 are not separated from each other and stably coupled with each other by the fixing portion 426a.

In addition, since a rail hinge unit and a slide hinge unit are substantially identical with the rail hinge unit 210 and the slide hinge unit 220 of the first embodiment and function and effect of elements are formed substantially identical with the first embodiment, the description and the drawings of the previous embodiment may be referred to.

FIG. 14 is a cross-sectional view illustrating a changed example of the slide hinge device according to the third embodiment of the present invention.

Referring to FIG. 14, a guide rail 490a is formed inwardly on a slide guide 490. A guide sill 492a bent or molded in the shape of an L is formed on both sides of a rail plate 492 and is closely attached to the guide rail 490a. Therefore, mutual separation of the slide guide 490 and the rail plate 492 may be prevented.

FIGS. 15 through 17 are partial enlarged views illustrating fixing portions of slide hinge devices according to other embodiments of the present invention, similar to the third embodiment.

Referring to FIG. 15, a top of a guide frame is cut to form a fixing portion. In this case, the fixing portion may be bent inwardly, vertical to the guide frame and a part of the fixing portion may be bent again vertically to the fixing portion. Accordingly, the fixing portion has a protruded part P whose top and bottom are contained by slide guides and stably binds the guide frame and the slide guides.

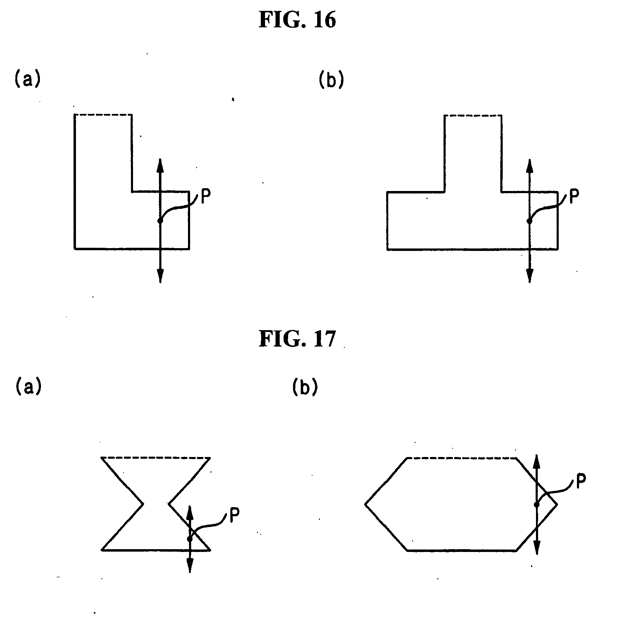

Referring to FIG. 16, a fixing portion is cut in the shape of an L or T and bent toward a hinge unit. Accordingly, when the fixing portion is inwardly bent on a guide frame, a top and bottom of the protruded part P are contained by slide guides when molding. However, according to an intention of the designer, the fixing portion may be cut to be similar to an L or T. However, in other embodiments of the present invention, according to an intention of the designer, the fixing portion may be injection molded in the shape of an L or T.

Referring to FIG. 17, a fixing portion may be cut in the shape of a bent line and may be bent toward a rail hinge unit. Similarly, since a top and bottom of a protruded part P of the fixing portion are contained by slide guides, a guide frame and the slide guides may be stably coupled by the fixing portion. Also, the fixing portion may have a cut line in various shapes, in which the top and bottom of the protruded part P are contained by the slide guides.

Also, at least a part of the fixing portion may be formed in various shapes in which the top and bottom are contained by injection molded slide guides. For example, after forming a hole in a fixing portion by punching and bending the punched fixed portion, a slide guide may be formed by molding and fixed to the fixing portion by the hole. At least one portion of the fixing portion, which is near the hole, may be contained in the slide guide to be fixed to it. Also, after pressing a surface of a fixing portion vertically and bending the pressed fixed portion, the fixing portion may be formed to have a curved surface and the slide guide may be fixed to the fixing portion by injection molding. As described above, a fixing portion may be formed in various shapes to contain slide guides on a top and bottom of a protruded part P.

### Embodiment 4

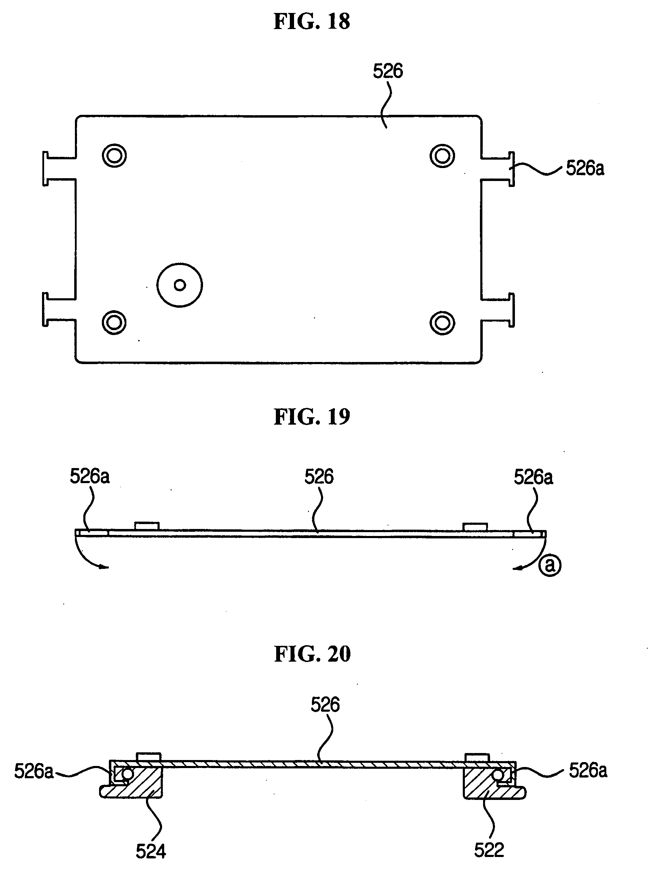

FIG. 18 is a front view illustrating a slide hinge device according to a fourth embodiment of the present invention, FIG. 19 is a side view of the slide hinge device of FIG. 18, and FIG. 20 is a cross-sectional view illustrating the slide hinge device of FIG. 18.

Referring to FIGS. 18 through 20, a fixing portion 526a is connected to an end surface of a guide frame 526. Accordingly, the fixing portion 526a may be bent downwardly (see ⓐ), and an end portion of the fixing portion 526a is bent again to be formed in the shape of L. Accordingly, this cut part is bent again toward a side of the guide frame 526. Accordingly, the guide frame 526 is connected to slide guides 522 and 524 to be integrated by the fixing portion 526a.

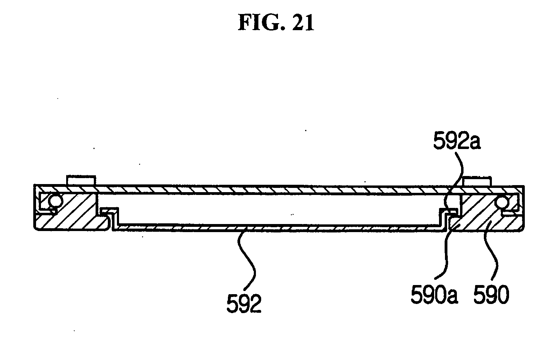

FIG. 21 is a cross-sectional view illustrating a changed example of the slide hinge device according to the fourth embodiment of the present invention.

Referring to FIG. 21, a guide rail 590a is inwardly formed on a slide guide 590. A guide sill 592a bent or molded in the shape of an L is formed on both sides of a rail plate 592 and is closely attached to the guide rail 590a. Therefore, mutual separation of the slide guide 590 and the rail plate 592 may be prevented.

### Embodiment 5

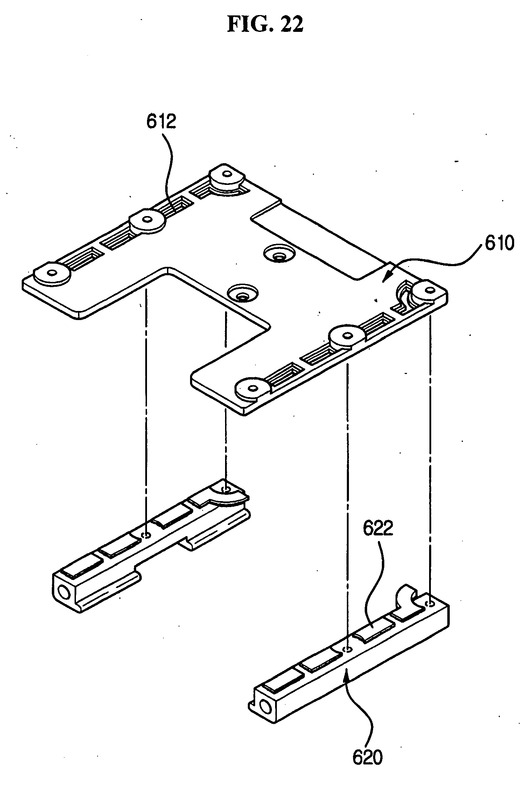

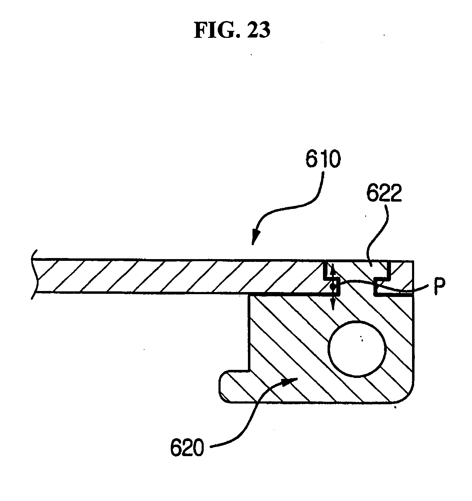

FIG. 22 is a partial exploded perspective view illustrating a slide hinge device according to a fifth embodiment of the present invention, and FIG. 23 is a partial cross-sectional view illustrating the slide hinge device of FIG. 22.

Referring to FIGS. 22 and 23, a fixing groove 612 is formed on a guide frame 610 and has layers in which a lower part is smaller than an upper part. Accordingly, when directly injection molding in the guide frame 610, a top and bottom of a protruded part P are contained by a slide guide 620, thereby providing stable coupling. In this case, the guide frame 610 may be formed by die casting. Also, a plurality of fixing portions 622 is located at both sides of the slide guide 620 longitudinally. However, in other embodiments of the present invention, according to an intention of the designer, a shape and a number of a fixing portion may be variously determined. Also, a hole for screw on a top of the guide frame 610 is for coupling the guide frame 510 with a terminal body, and the screw may be connected to the slide guide 620 via the hole.

### Industrial Applicability

Accordingly, in the slide hinge device and the personal portable device according to the present invention, slide guides may be formed to be integrated with a guide frame, and an upper supporter and lower supporter integrated with a guide bar may be formed on both end portions of a rail plate. Accordingly, since there is no need to additionally assemble the upper supporter and lower supporter with the guide bar and to mutually assemble the guide frame with the slide guide, manufacturing processes may be reduced and manufacturing cost may be reduced.

Also, since the guide frame and the slide guide are coupled with each other simultaneously with a molding process, an error between components may be minimized and a defect rate may be reduced.

Also, since a slide guide may be formed of a lubricant material, there is no dust created and slide functionality may be improved when it sliding along a guide bar.

Also, the slide hinge device formed of a lubricant material has excellent mechanical, thermal, and chemical property due to a property of manufacturing material and has better fatigue resistant and antifriction properties than a conventional hinge device.

## Claims

1. A slide hinge device comprising:
a rail hinge unit (210) including guide bars (150a, 150b, 214) disposed parallel to each other; and
a slide hinge unit (220) including a guide frame (226, 292, 326, 426, 526, 610) having a fixing portion (226a, 292a, 326a, 426a, 526a, 622) and slide guides (222, 224, 290, 322, 324, 390, 422, 424, 490, 522, 524, 590, 620) having a penetration hole (225) formed in a center, corresponding to each of the guide bars (150a, 150b, 214), **characterized in that**
the slide guides (222, 224, 290, 322, 324, 390, 422, 424, 490, 522, 524, 590, 620) are injection molded to the guide frame (226, 292, 326, 426, 526, 610) to be fixed to the guide frame (226, 292, 326, 426, 526, 610) by means of the fixing portion (226a, 292a, 326a, 426a, 526a, 622).

2. The device of claim 1, wherein the fixing portion (226a, 292a, 326a, 426a, 526a, 622) is formed by cutting a part of the guide frame (226, 292, 326, 426, 526, 610) and bending the cut part toward the rail hinge unit (210), and the top and bottom of at least a part of the fixing portion (226a, 292a, 326a, 426a, 526a, 622) are contained by the slide guide (222, 224, 290, 322, 324, 390, 422, 424, 490, 522, 524, 590, 620).

3. The device of claim 1, wherein the fixing portion (226a, 292a, 326a, 426a, 526a, 622) is formed on both sides of the guide frame (226, 292, 326, 426, 526, 610) to be protruded toward the guide bar (150a, 150b, 214) by casting or bending, and a top and bottom of at least a part of the fixing portion (226a, 292a, 326a, 426a, 526a, 622) are contained by the injection molded slide guide (222, 224, 290, 322, 324, 390, 422, 424, 490, 522, 524, 590, 620).

4. The device of claim 2 or 3, wherein the fixing portion (226a, 292a, 326a, 426a, 526a, 622) is formed shaped with a curved surface or a bent surface.

5. The device of claim 2 or 3, wherein the fixing portion (226a, 292a, 326a, 426a, 526a, 622) is bent in at least two points to have a part formed in the shape of a letter L.

6. The device of claim 2, wherein the fixing portion (226a, 292a, 326a, 426a, 526a, 622) is cut to be formed in the shape of a bent line and is bent or molded toward the rail hinge unit (210).

7. The device of claim 2, wherein the fixing portion (226a, 292a, 326a, 426a, 526a, 622) is cut in the shape of one of a letter L and a letter T, and is bent or molded toward the rail hinge unit (210).

8. The device of claim 1, wherein the fixing portion (226a, 292a, 326a, 426a, 526a, 622) has a fixing groove (612) with unevenness therein, the unevenness whose top and bottom are contained by the injection molded slide guide (222, 224, 290, 322, 324, 390, 422, 424, 490, 522, 524, 590, 620).

9. The device of claim 8, wherein the fixing groove (612) is formed in the shape of stairs.

10. The device of claim 1, wherein the rail hinge unit (210) further includes:
an upper supporter (213a) for fixing the top of each of the guide bars (150a, 150b, 214); and
a lower supporter (116, 213b) for fixing the bottom of each of the guide bars (150a, 150b, 214).

11. The device of claim 10, wherein the rail hinge unit (210) further includes a rail plate (212, 392, 492, 592) connected to be integrated with the upper supporter (213a) and the lower supporter (116, 213b).

12. The device of claim 11, wherein a guide sill (118a, 118b, 212a, 392a, 492a, 592a) formed in the shape of an L is formed on a side of the rail plate (212, 392, 492, 592) and the slide guide (222, 224, 290, 322, 324, 390, 422, 424, 490, 522, 524, 590, 620) includes a guide projection (290a) corresponding to the guide sill (118a, 118b, 212a, 392a, 492a, 592a).

13. The device of claim 1, wherein a guide projection (290a) is formed on an outer side surface of the slide guide (222, 224, 290, 322, 324, 390, 422, 424, 490, 522, 524, 590, 620) to be externally projected, and a guide rail (222a, 224a, 290b, 390a, 490a, 590a) is provided adjacent to an outer side of the slide hinge unit (220) to be close to the guide projection (290a).

14. The device of claim 1, wherein the slide guide (222, 224, 290, 322, 324, 390, 422, 424, 490, 522, 524, 590, 620) is formed of a lubricant material.

15. A method of manufacturing a slide hinge device, the method comprising:
' providing a rail hinge unit (210) including at least one guide bar (150a, 150b, 214) parallel with a side thereof and a guide frame (226, 292, 326, 426, 526, 610) disposed adjacent to the guide bar (150a, 150b, 214);
cutting a portion of the guide frame (226, 292, 326, 426, 526, 610) for bending; bending the cut portion of the guide frame (226, 292, 326, 426, 526, 610) internally; disposing the bent portion of the guide frame (226, 292, 326, 426, 526, 610) in a first mold (250), the bent portion being adjacent to a core of the first mold space (252);
molding a slide guide (222, 224, 290, 322, 324, 390, 422, 424, 490, 522, 524, 590, 620) integrated with the guide frame (226, 292, 326, 426, 526, 610) by using the bend portio in the first mold (250); and
connecting the guide frame (226, 292, 326, 426, 526, 610) and the slide guide (222, 224, 290, 322, 324, 390, 422, 424, 490, 522, 524, 590, 620) to the rail hinge unit (210).

16. The method of claim 15, wherein the connecting the guide frame (226, 292, 326, 426, 526, 610) and the slide guide (222, 224, 290, 322, 324, 390, 422, 424, 490, 522, 524, 590, 620) to the rail hinge unit (210) includes:
inserting the guide bar (150a, 150b, 214) into a penetration hole (225) formed in a center of the slide guide (222, 224, 290, 322, 324, 390, 422, 424, 490, 522, 524, 590, 620);
disposing the slide guide (222, 224, 290, 322, 324, 390, 422, 424, 490, 522, 524, 590, 620) and the guide bar (150a, 150b, 214) in a second mold (260);
molding an upper supporter (213a) and a lower supporter (116, 213b) for fixing both ends of the guide bar (150a, 150b, 214) in the second mold (260); and
assembling the upper supporter (213a) and lower supporter (116, 213b) with a rail plate (212, 392, 492, 592).

17. The method of claim 15, further comprising:
interposing an elastic element between the rail hinge unit (210) and the slide hinge unit (220), wherein the elastic element providing two directions of repulsive forces, which are opposite to each other and switched at a point on a movement path of the slide hinge unit (220).

## Patentansprüche

1. Schiebe-Klapp-Gerät, mit:
einer Schienenklappeinheit (210) mit Führungsstangen (150a, 150b, 214), die parallel zueinander angeordnet sind; und
einer Schiebe-Klapp-Einheit (220) mit einem Führungsrahmen (226, 292, 326, 426, 526, 610), der einen Fixierabschnitt (226a, 292a, 326a, 426a, 526a, 622) und Schiebeführungen (222, 224, 290, 322, 324, 390, 422, 424, 490, 522, 524, 590, 620) mit einer Durchgangsbohrung (225) in der Mitte entsprechend jeder Führungsstange (150a, 150b, 214) hat,
**dadurch gekennzeichnet, dass**
die Schiebeführungen (222, 224, 290, 322, 324, 390, 422, 424, 490, 522, 524, 590, 620) an den Führungsrahmen (226, 292, 326, 426, 526, 610) spritzgegossen sind, um am Führungsrahmen (226, 292, 326, 426, 526, 610) mittels des Fixierabschnitts (226a, 292a, 326a, 426a, 526a, 622) fixiert zu werden.

2. Gerät nach Anspruch 1, bei dem der Fixierabschnitt (226a, 292a, 326a, 426a, 526a, 622) ausgebildet ist, indem ein Teil des Führungsrahmens (226, 292, 326, 426, 526, 610) ausgeschnitten und der ausgeschnittene Teil zur Schienenklappeinheit (210) gebogen ist, und die Ober- und Unterseite mindestens eines Teils des Fixierabschnitts (226a, 292a, 326a, 426a, 526a, 622) von der Schiebeführung (222, 224, 290, 322, 324, 390, 422, 424, 490, 522, 524, 590, 620) gehalten werden.

3. Gerät nach Anspruch 1, bei dem der Fixierabschnitt (226a, 292a, 326a, 426a, 526a, 622) an beiden Seiten des Führungsrahmens (226, 292, 326, 426, 526, 610) durch Gießen oder Biegen so ausgebildet ist, dass er zur Führungsstange (150a, 150b, 214) hervorragt, und eine Ober- und Unterseite mindestens eines Teils des Fixierabschnitts (226a, 292a, 326a, 426a, 526a, 622) von der spritzgegossenen Schiebeführung (222, 224, 290, 322, 324, 390, 422, 424, 490, 522, 524, 590, 620) gehalten werden.

4. Gerät nach Anspruch 2 oder 3, bei dem der Fixierabschnitt (226a, 292a, 326a, 426a, 526a, 622) mit einer gekrümmten oder gebogenen Oberfläche ausgebildet ist.

5. Gerät nach Anspruch 2 oder 3, bei dem der Fixierabschnitt (226a, 292a, 326a, 426a, 526a, 622) an mindestens zwei Punkten gebogen ist, so dass ein Teil in Form des Buchstabens L ausgebildet ist.

6. Gerät nach Anspruch 2, bei dem der Fixierabschnitt (226a, 292a, 326a, 426a, 526a, 622) so ausgeschnitten ist, dass er die Form einer gebogenen Linie hat und zur Schienenklappeinheit (210) gebogen oder geformt ist.

7. Gerät nach Anspruch 2, bei dem der Fixierabschnitt (226a, 292a, 326a, 426a, 526a, 622) so ausgeschnitten ist, dass er entweder die Form des Buchstabens L oder des Buchstabens T hat und zur Schienenklappeinheit (210) gebogen oder geformt ist.

8. Gerät nach Anspruch 1, bei dem der Fixierabschnitt (226a, 292a, 326a, 426a, 526a, 622) eine Fixiernut (612) mit einer Unebenheit darin hat, wobei die Ober- und Unterseite der Unebenheit von der spritzgegossenen Schiebeführung (222, 224, 290, 322, 324, 390, 422, 424, 490, 522, 524, 590, 620) gehalten werden.

9. Gerät nach Anspruch 8, bei dem die Fixiernut (612) in Treppenform ausgebildet ist.

10. Gerät nach Anspruch 1, bei dem die Schienenklappeinheit (210) ferner enthält:
eine obere Halterung (213a) zum Befestigen der Oberseite jeder Führungsstange (150a, 150b, 214); und
eine untere Halterung (116, 213b) zum Befestigen der Unterseite jeder Führungsstange (150a, 150b, 214).

11. Gerät nach Anspruch 10, bei dem die Schienenklappeinheit (210) ferner eine Schienenplatte (212, 392, 492, 592) enthält, die so angeordnet ist, dass sie mit der oberen Halterung (213a) und der unteren Halterung (116, 213b) integriert ist.

12. Gerät nach Anspruch 11, bei dem ein Führungsschenkel (118a, 118b, 212a, 392a, 492a, 592a) in Form eines L an einer Seite der Schienenplatte (212, 392, 492, 592) ausgebildet ist, und die Schiebeführung (222, 224, 290, 322, 324, 390, 422, 424, 490, 522, 524, 590, 620) einen Führungsvorsprung (290a) enthält, der dem Führungsschenkel (118a, 118b, 212a, 392a, 492a, 592a) entspricht.

13. Gerät nach Anspruch 1, bei dem ein Führungsvorsprung (290a) an einer äußeren Seitenoberfläche der Schiebeführung (222, 224, 290, 322, 324, 390, 422, 424, 490, 522, 524, 590, 620) so ausgebildet ist, dass er nach außen vorspringt, und eine Führungsschiene (222a, 224a, 290b, 390a, 490a, 590a) neben einer Außenseite der Schiebe-Klapp-Einheit (220) so vorgesehen ist, dass sie sich nahe am Führungsvorsprung (290a) befindet.

14. Gerät nach Anspruch 1, bei dem die Schiebeführung (222, 224, 290, 322, 324, 390, 422, 424, 490, 522, 524, 590, 620) aus einem gleitfähigen Material besteht.

15. Verfahren zur Herstellung eines Schiebe-Klapp-Geräts, wobei das Verfahren aufweist:
Bereitstellen einer Schienenklappeinheit (210) mit mindestens einer Führungsstange (150a, 150b, 214), die parallel zu einer Seite derselben angeordnet ist, und eines Führungsrahmens (226, 292, 326, 426, 526, 610), der neben der Führungsstange (150a, 150b, 214) angeordnet ist;
Ausschneiden eines Abschnitts des Führungsrahmens (226, 292, 326, 426, 526, 610) zum Biegen;
Biegen des ausgeschnittenen Abschnitts des Führungsrahmens (226, 292, 326, 426, 526, 610) nach innen;
Anordnen des gebogenen Abschnitts des Führungsrahmens (226, 292, 326, 426, 526, 610) in einer ersten Form (250), wobei der gebogene Abschnitt neben dem Kern des ersten Formraums (252) liegt;
Formen einer Schiebeführung (222, 224, 290, 322, 324, 390, 422, 424, 490, 522, 524, 590, 620), die mit dem Führungsrahmen (226, 292, 326, 426, 526, 610) integriert ist, unter Verwendung des gebogenen Abschnitts in der ersten Form;
und
Verbinden des Führungsrahmens (226, 292, 326, 426, 526, 610) und der Schiebeführung (222, 224, 290, 322, 324, 390, 422, 424, 490, 522, 524, 590, 620) mit der Schienenklappeinheit (210).

16. Verfahren nach Anspruch 15, bei dem das Verbinden des Führungsrahmens (226, 292, 326, 426, 526, 610) und der Schiebeführung (222, 224, 290, 322, 324, 390, 422, 424, 490, 522, 524, 590, 620) mit der Schienenklappeinheit (210) enthält:
Einführen der Führungsstange (150a, 150b, 214) in eine in der Mitte der Schiebeführung (222, 224, 290, 322, 324, 390, 422, 424, 490, 522, 524, 590, 620) ausgebildete Durchgangsbohrung (225);
Anordnen der Schiebeführung (222, 224, 290, 322, 324, 390, 422, 424, 490, 522, 524, 590, 620) und der Führungsstange (150a, 150b, 214) in einer zweiten Form (260);
Formen einer oberen Halterung (213a) und einer unteren Halterung (116, 213b) zum Befestigen beider Enden der Führungsstange (150a, 150b, 214) in der zweiten Form (260); und
Zusammenbauen der oberen Halterung (213a) und der unteren Halterung (116, 213b) mit einer Schienenplatte (212, 392, 492, 592).

17. Verfahren nach Anspruch 15, ferner mit:
Einsetzen eines elastischen Elements zwischen der Schienenklappeinheit (210) und der Schiebe-Klapp-Einheit (220), wobei das elastische Element Rückstoßkräfte in zwei einander entgegengesetzten Richtungen entwickelt, die an einem Punkt des Bewegungsweges der Schienenklappeinheit (210) umgeschaltet werden.

## Revendications

1. Dispositif à articulation coulissante, comprenant :
une unité d'articulation à rail (210) incluant des barres de guidage (150a, 150b, 214) disposées parallèlement les unes aux autres ; et
une unité d'articulation à coulisseau (220) incluant un cadre de guidage (226, 292, 326, 426, 526, 610) ayant une portion de fixation (226a, 292a, 326a, 426a, 526a, 622) et des guides de coulisseau (222, 224, 290, 322, 324, 390, 422, 424, 490, 522, 524, 590, 620) ayant un trou de pénétration (225) formé au centre, correspondant à chacune des barres de guidage (150a, 150b, 214),
**caractérisé en ce que**
les guides de coulisseau (222, 224, 290, 322, 324, 390, 422, 424, 490, 522, 524, 590, 620) sont moulés par injection sur le cadre de guidage (226, 292, 326, 426, 526, 610) pour être fixés sur le cadre de guidage (226, 292, 326, 426, 526, 610) au moyen de la portion de fixation (226a, 292a, 326a, 426a, 526a, 622).

2. Dispositif selon la revendication 1, dans lequel la portion de fixation (226a, 292a, 326a, 426a, 526a, 622) est formée en coupant une partie du cadre de guidage (226, 292, 326, 426, 526, 610) et en cintrant la partie coupée vers l'unité d'articulation à rail (210), et le sommet et le pied d'au moins une partie de la portion de fixation (226a, 292a, 326a, 426a, 526a, 622) sont contenus par le guide de coulisseau (222, 224, 290, 322, 324, 390, 422, 424, 490, 522, 524, 590, 620).

3. Dispositif selon la revendication 1, dans lequel la portion de fixation (226a, 292a, 326a, 426a, 526a, 622) est formée sur les deux côtés du cadre de guidage (226, 292, 326, 426, 526, 610) pour être en projection vers la barre de guidage () par coulée ou par cintrage, et un sommet et un pied d'au moins une partie de la portion de fixation (226a, 292a, 326a, 426a, 526a, 622) sont contenus par le guide de coulisseau moulé par injection (222, 224, 290, 322, 324, 390, 422, 424, 490, 522, 524, 590, 620).

4. Dispositif selon la revendication 2 ou 3, dans lequel la portion de fixation (226a, 292a, 326a, 426a, 526a, 622) est formée avec une surface incurvée ou une surface cintrée.

5. Dispositif selon la revendication 2 ou 3, dans lequel la portion de fixation (226a, 292a, 326a, 426a, 526a, 622) est cintrée en au moins deux points pour présenter une partie formée sous la forme d'une lettre L.

6. Dispositif selon la revendication 2, dans lequel la portion de fixation (226a, 292a, 326a, 426a, 526a, 622) est coupée pour être formée sous la forme d'une ligne cintrée et est cintrée ou moulée en direction de l'unité d'articulation à rail (210).

7. Dispositif selon la revendication 2, dans lequel la portion de fixation (226a, 292a, 326a, 426a, 526a, 622) est coupée sous la forme d'une lettre L ou d'une lettre T, et est cintrée ou moulée en direction de l'unité d'articulation à rail (210).

8. Dispositif selon la revendication 1, dans lequel la portion de fixation (226a, 292a, 326a, 426a, 526a, 622) comporte une gorge de fixation (612) avec une inégalité à l'intérieur, le sommet et le pied de l'inégalité étant contenus par le guide de coulisseau moulé par injection (222, 224, 290, 322, 324, 390, 422, 424, 490, 522, 524, 590, 620).

9. Dispositif selon la revendication 8, dans lequel la gorge de fixation (612) est formée sous une forme en escalier.

10. Dispositif selon la revendication 1, dans lequel l'unité d'articulation à rail (210) inclut en outre :
un élément de support supérieur (213a) pour fixer le sommet de chacune des barres de guidage (150a, 150b, 214) ; et
un élément de support inférieur (116, 213b) pour fixer le pied de chacune des barres de guidage (150a, 150b, 214).

11. Dispositif selon la revendication 10, dans lequel l'unité d'articulation à rail (210) inclut en outre une plaque à rail (212, 392, 492, 592) connectée pour être intégrée avec l'élément de support supérieur (213a) et l'élément de support inférieur (116, 213b).

12. Dispositif selon la revendication 11, dans lequel un longeron de guidage (118a, 118b, 212a, 392a, 492a, 592a) formé sous une forme en L est formé sur à côté de la plaque à rail (212, 392, 492, 592) et le guide de coulisseau (222, 224, 290, 322, 324, 390, 422, 424, 490, 522, 524, 590, 620) inclut une projection de guidage (290a) correspondant au longeron de guidage (118a, 118b, 212a, 392a, 492a, 592a).

13. Dispositif selon la revendication 1, dans lequel une projection de guidage (290a) est formée sur une surface latérale extérieure du guide de coulisseau (222, 224, 290, 322, 324, 390, 422, 424, 490, 522, 524, 590, 620) de manière à être en projection à l'extérieur, et un rail de guidage (222a, 224a, 290b, 390a, 490a, 590a) est prévu adjacent à un côté extérieur de l'unité d'articulation à coulisseau (220) pour être proche de la projection de guidage (290a).

14. Dispositif selon la revendication 1, dans lequel le guide de coulisseau (222, 224, 290, 322, 324, 390, 422, 424, 490, 522, 524, 590, 620) est formé en un matériau lubrifiant.

15. Procédé pour fabriquer un dispositif à articulation coulissante, le procédé comprenant les étapes consistant à :
fournir une unité d'articulation à rail (210) incluant au moins une barre de guidage (150a, 150b, 214) parallèle avec un côté de l'unité et un cadre de guidage (226, 292, 326, 426, 526, 610) disposé adjacent à la barre de guidage (150a, 150b, 214) ;
couper une portion du cadre de guidage (226, 292, 326, 426, 526, 610) pour la cintrer ;
cintrer la portion coupée du cadre de guidage (226, 292, 326, 426, 526, 610) vers l'intérieur ;
disposer la portion cintrée du cadre de guidage (226, 292, 326, 426, 526, 610) dans un premier moule (250), la portion cintrée étant adjacente à un noyau du premier espace de moulage (252) ;
mouler un guide de coulisseau (222, 224, 290, 322, 324, 390, 422, 424, 490, 522, 524, 590, 620) intégré avec le cadre de guidage () en utilisant la portion cintrée du premier moule (250) ; et
connecter le cadre de guidage (226, 292, 326, 426, 526, 610) et le guide de coulisseau (222, 224, 290, 322, 324, 390, 422, 424, 490, 522, 524, 590, 620) sur l'unité d'articulation à rail (210).

16. Procédé selon la revendication 15, dans lequel la connexion du cadre de guidage (226, 292, 326, 426, 526, 610) et du guide de coulisseau (222, 224, 290, 322, 324, 390, 422, 424, 490, 522, 524, 590, 620) sur l'unité d'articulation à rail (210) inclut les opérations consistant à :
insérer la barre de guidage (150a, 150b, 214) dans un trou de pénétration (225) formé dans un centre du guide de coulisseau (222, 224, 290, 322, 324, 390, 422, 424, 490, 522, 524, 590, 620) ;
disposer le guide de coulisseau (222, 224, 290, 322, 324, 390, 422, 424, 490, 522, 524, 590, 620) et la barre de guidage (150a, 150b, 214) dans un second moule (260) ;
mouler un élément de support supérieur (213a) et un élément de support inférieur (116, 213b) pour fixer les deux extrémités de la barre de guidage (150a, 150b, 214) dans le second moule (260) ; et
assembler l'élément de support supérieur (213a) et l'élément de support inférieur (116, 213b) avec une plaque à rail (212, 392, 492, 592).

17. Procédé selon la revendication 15, comprenant en outre :
l'interposition d'un élément élastique entre l'unité d'articulation à rail (210) et l'unité d'articulation à coulisseau (220), tel que l'élément élastique exerce des forces répulsives dans deux directions, qui sont opposées l'une à l'autre et qui sont commutées en un point sur un trajet de mouvement de l'unité d'articulation à coulisseau (220).
